# EUROPEAN PATENT APPLICATION

(11) **EP 4 265 115 A1**
(43) Date of publication of application: **25.10.2023**
(21) Application number: 23168035.6
(22) Date of filing: 14.04.2023
(51) Int. Cl.: A22C 25/14

(54) **AN APPARATUS AND A METHOD FOR PROCESSING OF FISH**

(30) Priority: 21.04.2022 DK PA202200367
(71) Applicant: Norbech A/S, 9230 Svenstrup J (DK)
(72) Inventor: Rix, Ole Hilmar, 9610 Nørager (DK); Jensen, Bjarne Normann, 9220 Aalborg Ø (DK); Salvesen, Allan, 9230 Svenstrup J. (DK)
(74) Representative: Larsen & Birkeholm A/S

(57) **Abstract**

An apparatus for processing fish with collarbones and heads with gills, such as salmon with heads, which apparatus comprises; two rotating circular knives mounted in guides adapted such that their centres of rotation can be moved synchronously towards or away from each other. Tilting mechanisms are provided at the knives individual centre of rotation. The tilting mechanisms are adapted such that the angles defined by the plane of the circular knives can be changed individually and independently of whether the blades move towards or away from each other.

## Description

### Technical field of the invention

The invention relates to an apparatus for processing fish with collarbones and heads with gills, such as salmon with heads, which apparatus comprises;
two rotating circular knives mounted in guides adapted such that the knives centres of rotation can be moved synchronously towards or away from each other.

In prior art technics, the process is initiated by cutting off the head with pectoral fins and collarbones. After this the salmon's body is cut or processed in another step in order to obtain as much meat as possible for human consumption. The salmon's head with pectoral fins and collarbone is processed into a - commercially - less attractive product such as e.g. animal feed or soups. This is unfortunate, as the meat from the area around the salmon's collarbones and pectoral fins is not used for human consumption. This meat is even considered a delicacy.

It is an object of the invention to overcome disadvantages in prior art apparatus or to provide an alternative solution.

This is achieved in that tilting mechanisms are provided at the knives individual centre of rotation, which tilting mechanisms are adapted such that the angles defined by the plane of the circular knives can be changed individually and independently of whether the blades move towards or away from each other.

Embodiments of the invention are recited in the dependent claims.

The invention also relates to a method as recited in claims 8-15.

An embodiment of the invention will now be explained with reference to the figures where:
fig 1 shows in perspective a supply station;
fig. 2 shows in perspective a supply station with a fish inserted;
fig 3 shows in perspective a supply station when a fish is leaving;
fig 4 shows in perspective a cutter having two circular knives;
fig 5 shows, from the belly side of a fish, a cut made by two circular knives;
fig 6 shows the mechanics that enables individual tilting and/or synchronized movement of two circular knives;
fig 7 shows an embodiment where a band saw is used to cut off the head of a fish;
Fig. 8 shows an embodiment where the fish head is cut off by a band saw.

The invention relates to an apparatus for processing fish with collarbones and heads with gills, such as salmon with heads. In prior art technics, the process of cutting out a salmon is initiated by cutting off the head with pectoral fins and collarbones. After this the salmon's body is cut or processed in order to obtain as much meat as possible for human consumption. The salmon's head with pectoral fins and collarbone is processed into a - commercially - less attractive product such as e.g. animal feed or soups.

This is unfortunate, as the meat around the salmon's collarbones and pectoral fins is not used for human consumption. This meat is even considered a delicacy.

By the invention it is possible to determine the collarbone of a fish and once this is localized, subsequent process steps can cut out and separate the collarbones with pectoral fin from fish, such as salmon.

In a process step, the machine according to the invention can thus determine the collarbone of a fish, after which subsequent process steps can cut these out with or without the fish's pectoral fin.

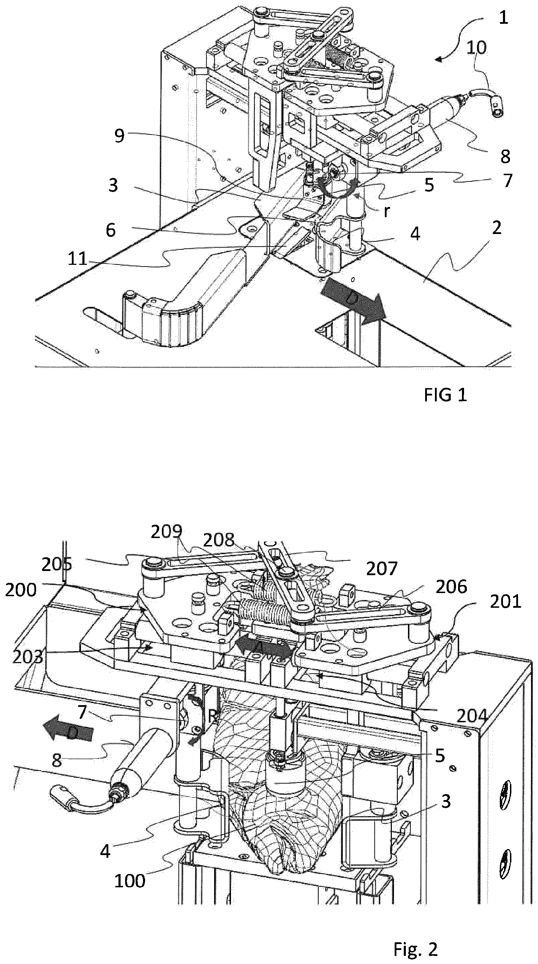

Figure 1 shows a supply station 1 comprising means for locating the collarbone (calvicle) of a fish. The fish is led into the supply station 1 via a guide track and with the fish's head in front. In the exemplary embodiment of the invention shown, the guide track comprises two sideplates 3 and 4. These sideplates act as guides and the actual introduction of the fish takes place by leading the fish into the supply station headfirst and with the fish's back side (dorsal side) abutting the sideplate 3 while the fish's abdomen/belly (ventral region) abutting the sideplate 4. The fish is thus introduced into the supply station lying on its one side. Inside the supply station, the top of a pawl 6 can be seen. It is this pawl that forms a stop for further feeding of the fish into the supply station 1.

The pawl is preferably made as a solid cylinder with a rounded tip and a diameter between 15mm and 25 mm. Preferably with a diameter between 20mm and 25 mm. The pawl is preferably made as a solid steel cylinder.

Figure 2 shows the supply station from the other side and a fish 100 is inserted in it. At the top of figure 2, two anchor plates 200 and 201 are seen. The anchor plate 200 is connected to sideplate 4 (for back / dorsal side) via a guide groove 200 and the anchor plate 201 is connected to sideplate 4 via a second guide groove 201. The two anchor plates 200 and 201 are mutually connected via a scissor-like connection comprising three connected rods 205, 206 and 207. The first rod 205 is connected to the anchor plate 200 (the anchor plate to the left in Figure 2) at one end thereof. The other end of the first rod 205 is connected to one end of the centrally positioned second rod 207 which is rotatably attached to a central pivot point 208. The centrally positioned second rod 207 is connected at its other end to one end of the third rod 206, which is connected to the anchor plate 201 (the anchor plate to the right in Figure 2). The arrangement with the three rods 205, 206 and 207 and their interconnections ensures a synchronous movement of the anchor plates and thus also of their associated sideplates 3 and 4 towards and away from each other as indicated by the arrow A.

This synchronous movement of sideplates 3 and 4 prevents the fish from moving towards their belly or back side when they are inserted into the supply station. The synchronous movement thus also entails that the fish's collarbone (clavicle) hits the pawl 6. Above the fish's head is a counter hold 5 located which prevents the fish's head from being pushed so far into the supply station that the fish's collarbone passes / jumps over the pawl 6.

At the top of supply station shown in figure 2 is a spring arrangement 209 which pulls the two anchor plates towards each other. This ensures a uniform and safe guidance of fish, as the two anchor plates will exert the same force on both side of the fish. Pulling the two sideplates 3 and 4 against each other by a spring mechanism as shown is a good and simple solution. However, the two side plates can of course be pulled towards each other in many other ways known to the person skilled in the art. For example, by using stepper motors.

To the left in Figure 2 (to the right in Figure 1) is shown an arrow D. This arrow indicates the direction of the fish when it leaves the supply station. For this, the sideplate 4 (the one on the left in figure 2) is adapted so that it can be tilted out as indicated by the arrow R. When sideplate 4 is tilted, the actual rotation takes place in a bearing connection 7. In a preferred embodiment, the bearing connection 7 is connected to a measuring device 8. It is with the invention realized that the rotation/change of angle that occurs when a fish body "tilts" sideplate 4 during its passage out of the supply station is an indirect measure of the size/characteristic of the fish. Thus, in a preferred embodiment, information about the rotation/change of angle is sent electronically via a connection 10 to one or more computers, which can then calculate characteristics of the fish. These characteristics are used in the later processing of the fish, e.g., in a process step where the fish's collarbone is cut free.

Measurement of the characteristics of the fish can also be combined or performed with other measurement methods, such as: optical measurement, weight measurement and / or measurement of the distance between the two sideplates 3 and 4 and the results of these measurements can of course also be sent electronically to one or more computers in the device such that these measures can be utilized in process steps.

To determine if (when) a fish is located in the supply st0ation, it is made with a sensor 11 (which is best seen in Figure 1). This sensor is a tilting device, but it can of course be made in other ways known to those skilled in the art.

Once a fish is sensed by the sensor 11 in the supply station, a transport mechanism starts directing the fish from the supply station to a position where the next process step is performed. The conveyor/transport may be initiated simultaneously when the sensor 11 detects a fish in the supply station. However, a short delay from detection to start of the transport mechanism may be advantageous. The transport mechanism can be made in many ways, and normally it comprises a conveyor belt with spikes. Since transport mechanisms are well known to those skilled in the art, they will not be explained further in this application.

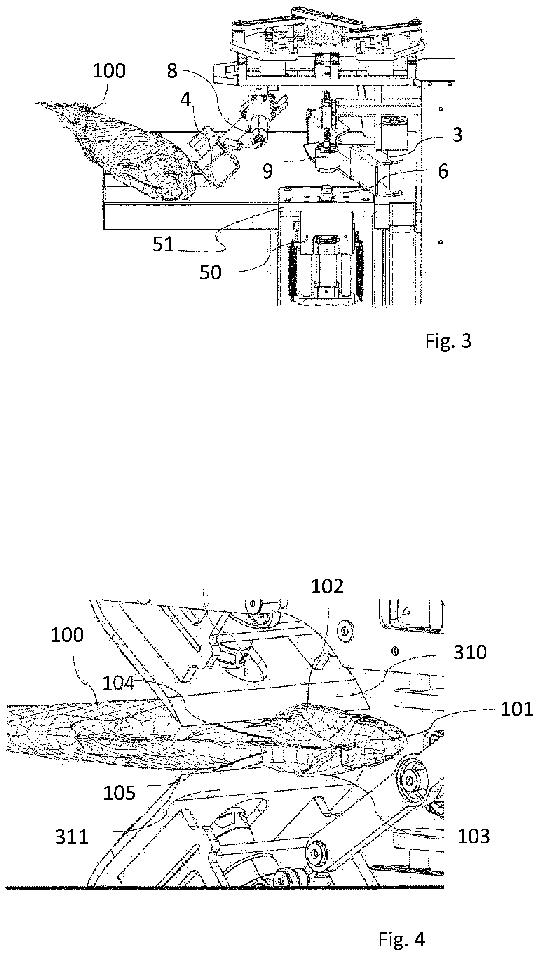

Figure 3 shows a supply station from which a fish 100 has just been transported out. For illustrative purposes, sideplate 4 is shown in the position it was given when it was rotated by the fish 100 during its movement out of the supply station.

The scenario shown in Figure 3 is not completely realistic as the sideplate 4 will normally be retracted to its initial position as shown in Figures 1 and 2 as soon as the fish has passed it.

At the bottom of Figure 3 a spring-provided mechanism 50 is seen, this mechanism is connected to the pawl 6 so that the spring mechanism holds the pawl 6 in its projected position.

The pawl 6 is in the embodiment shown positioned such that it extends from a flat surface 51 and the spring mechanism 50 is established below the flat surface.

The pawl 6 is in one embodiment adapted for electrical activation comprising electric actuators which can draw in and / or push out the pawl 6 and these movements can be controlled by any of the computers in the system so that the pawl lies with its upper side/surface flush with the planar surface 51 as long as the sensor 11 does not detect a fish in the supply station, in this embodiment the pawl will be pushed out of the electric actuators when the sensor 11 detects a fish in the supply station. The movements of the pawl 6 in and out of the planar surface 51 may also be controlled by a combination of the spring mechanism 50 and electric actuators so that the spring mechanism 50 holds the pawl in a retracted position until the sensor 11 detects a fish in the supply station and sends information thereon to one or more computers which then activate actuators so that they - against the spring force of the spring mechanism 50 - moves the pawl to its extended position as shown in the figures.

To facilitate the further processing of the fish, including transport of the fish out of the supply station, the pawl - in one embodiment - is made retractable such that the pawl is retracted when the fish is completely inserted into the supply station. The retraction and further transport of the fish can be controlled by a computer in the apparatus, such that the retraction don't take place before the fish is secured by the gribber (s)

The mechanism which ejects and pulls the pawl back or push it out is - as earlier described - e.g. electrically driven, but this mechanism can in all embodiments of the invention also be powered pneumatically by compressed gas, such as compressed atmospheric air.

When a fish is placed in the supply station, the fish is - with the head in front - introduced into the supply station until the fish's collarbone hits the pawl 6. Then the fish is gripped by grippers in a transport mechanism (such as needles in a conveyor belt), and the transport mechanism then transports the fish out of the supply station for further processing.

Throughout this process, the fish is transported lying on the side it was on in the supply station and the actual cutting of the fish also takes place while the fish is lying on the side and the fish. During this the fish is held by the grippers in such a way that the position of the fish's collarbone in relation to the grippers is known from start to finish

In a following process step, where the fish's collarbone is to be cut free, the known position of the collarbone is utilized to adjust the transport mechanism and the grippers such that they deliver the fish laying on its side in a position where the fish's lower collarbone is placed such that a first rotating knife can make a cut that frees the lower collarbone of the fish.

Since fish as salmon are equipped with 2 collarbones and the collarbones are arranged essentially symmetrically on both side of a plane that runs parallel to the longitudinal direction of the fish and approximately in the middle of the fish from belly to back, another rotating knife can be placed such that it forms an - essentially - symmetrical cut. The symmetrical cut cuts the fish's other collarbone. However, it requires knowledge about the position of the above-mentioned plane. In connection with the discussion of Figure 2, a measuring device 8 connected to computers was mentioned. With this measuring device the thickness of a fish leaving the supply station can be measured. In an embodiment of the invention, this is utilized to estimate the position of said plane as laying in the middle of the measured thickness of the fish and this is used to guide a first and a second set of knives to cut off both collarbones of a fish, the two sets of knives being controlled by computers in the apparatus to cut symmetrically about said estimated plane of symmetry laying in the middle of the measured thickness.

In one embodiment, the fish is transported lying on the side it was on in the supply station and the actual cutting of the fish also takes place while the fish is lying on the side.

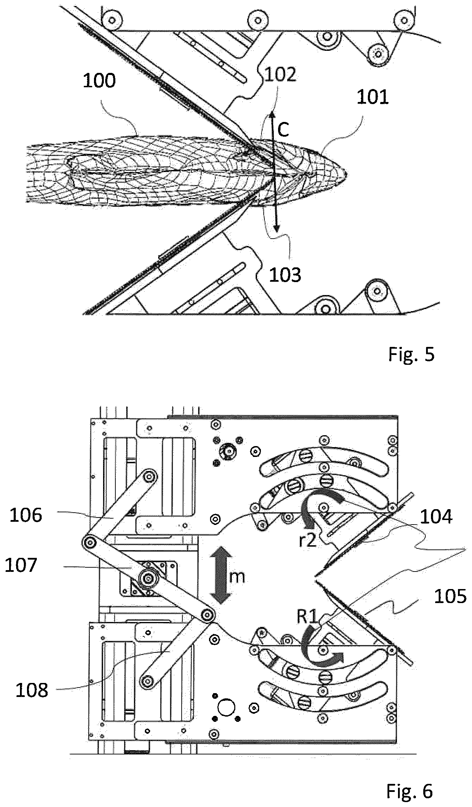

Figure 4 shows a fish transported to a cutting part capable of cutting the fish's two collarbones free. In the embodiment shown, the cutting part comprises two holders 310 and 311 which are inserted behind the collarbone of the fish. The two holders 310 and 311 fixates the two collarbones during the cutting. The two knives 104 and 105 are controlled by the apparatus's computer (s) and movements of the two rotating knives towards or away from each other take place synchronously by means of a rod mechanism 106, 107, 108 which is seen in figure 6 which we briefly go to. The rod connection 106, 107, 108 which ensures a synchronous movement of the knives is similar to the rod connection which guided the anchor plates shown in figures 1 and 2.

Unlike known systems, the knife arrangement according to the embodiment shown in figure 6 also comprises two individually controllable tilting mechanisms that can control the amount of tilting of each of the two knives 104 and 105 as shown by the arrows r1 and r2. The arrows r1 and r2 only show tilting in one direction, but of course, the knives 105 and 104 can be tilted individually in both directions. The advantage of this arrangement is that the individually controllable knives can compensate for asymmetry in a fish, this entails a higher yield of meat. Asymmetry can occur when a fish body lies on its side as the lower part of the fish is compressed due to gravity. In an embodiment of the invention the computers in the apparatus are thus programmed to calculate the asymmetry from received information about the dimensions and/or weight of the fish, for example information received from the measuring device 8 discussed in connection with Figures 1, 2 and 3 and then compute and control the individual tilting of the knives 104 and 105, in order to compensate for asymmetry.

Figure 5 shows how a cut can be made of the two knives 104 and 105. The fish 100 is shown here from the belly side and it is seen in the figure that the two rotating knives cut almost through the fish behind (towards the tail) the collarbone of the fish. In one embodiment, the cut is thus not completely passed through the fish, whereby the two collarbones are still connected to the main part 101 and the rest of the fish body. In one embodiment, the cut of the two knives 104 and 105 is made such that the collarbones, body part and the rest of the body sits together on the back of the fish. This is advantageous as the fish like the one in Figure 5 are most often cut open (to remove the guts) on the belly side in this part of the cutting process. In one embodiment, the herringbone is transported to an additional knife mechanism that performs a cut as shown by the arrow C in the figure. Thus, the slice C will separate the main body 101 from the parts 102 and 103 containing the collarbones of the fish, and the parts 102 and 103 will be separated from the body of the fish. Section C will thus divide the fish into four parts, two of which contain the collarbone of the fish; the two remaining parts are resp. the body of the fish and the head of the fish 101.

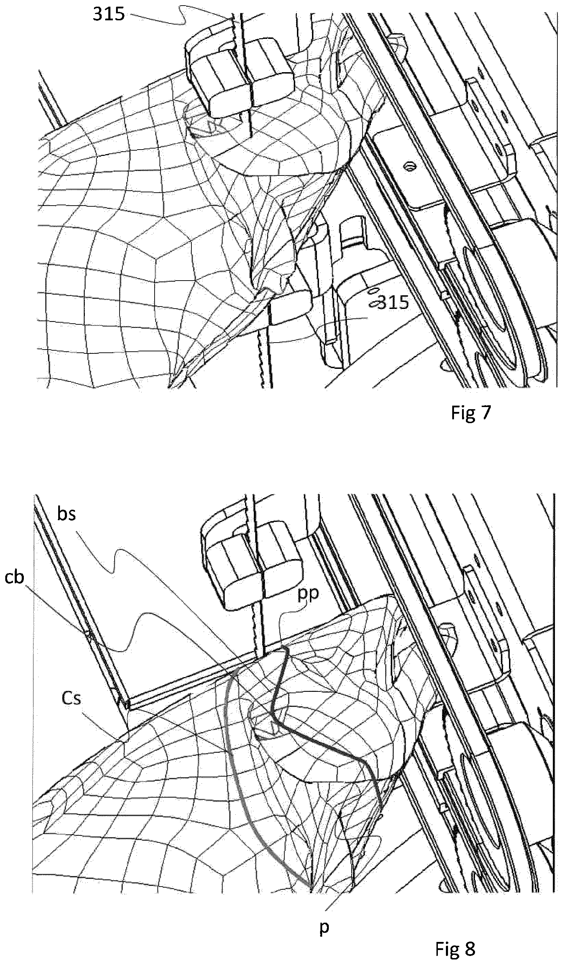

The cut C is in an embodiment made with a band saw 315 as the one shown in figure 7. The advantage of using a band saw for this part of the cutting process lays in that the band saw has a natural flexibility which entails that the cut more likely will follow the fish's soft parts instead of going through bones and the risk of quality reducing bone parts originating from the fish's head in one or more of the three parts for human consumption is thereby minimized. Using a band saw 315 to cut off the fish head as above described thus leads to a higher yield.

Figure 8 shows how the collarbones, and the head of a fish may be cut off by first use of circular saws a then a band saw. The figure shows two lines: bs and cs.

One of lines indicates the line that the circular saws follows when they are cutting the collarbones out in a process step cs, this line has the reference designation "cs". The second line "bs" indicates the line that the band saw follows when the band saw in a process step - that follows process step cs - is the cutting off the fish's head and collarbones. As can be seen from Figure 8, the line/cut in process step cs starts on the belly side of the fish and the cutting begins in a position in front (ie towards the fish's head) of the fish's collarbone cb. The cutting starts with a cut directly towards the back side of the fish, after which the knife at point P is turned, such that the cut is now directed towards the known position of the collarbone cb of the fish. Then the band saw is again turned and directed towards point PP, after which the band saw is led directly towards the back of the fish. This cutting with shift in cutting direction as explained above is enabled by the inherent flexibility of the band saw.

### Aspects of the invention

1. An apparatus for processing fish with collarbones and heads with gills, such as salmon with heads, which apparatus comprises;
   a supply station in which fish are supplied to the apparatus with their heads first, preferably manually, said supply station comprising a plate provided with a guide track for guiding the fish to a stop device;
   a computer-controlled cutting mechanism and; a computer-controlled transport mechanism provided with a gripper capable of gripping the fish at the stop device and holding it while being moved by the computer-controlled transport mechanism from the stop device to one or more positions where parts of the fish are cut off CHARACTERIZED IN THAT, the stop device comprises a pawl, adapted such that the soft area in front of the collarbone, including the gills, will compress and pass over the pawl when the fish is supplied the supply station via the guide track, while the fish's collarbone (clavicle) will hit the pawl and stop further movement/supplying of the fisk to the supply station.
2. An apparatus for processing fish with collarbones and heads with gills, such as salmon with heads according to aspect 1, CHARACTERIZED IN THAT the guide track comprises a sideplate disposed adjacent to or on the plate and extending substantially perpendicular to the plane of the plate, which sideplate is adapted such that a fish is guided by the sideplate to the stop device if the fish's belly or back is placed against the sideplate while the fish is moved headfirst towards the pawl.
3. An apparatus for processing fish with collarbones and heads with gills, such as salmon with heads according to aspect 1 or 2, CHARACTERIZED IN THAT the guide track comprises two sideplates arranged on the plate and extending substantially perpendicular to the plane of the plate, which sideplates are adapted such that a fish is guided by the sideplates towards the stop device, if the fish's belly is placed against one sideplate while the fish's back is placed against the other sideplate and the fish is moved with its head first towards the pawl.
4. An apparatus for processing fish with collarbones and heads with gills, such as salmon with heads apparatus for cutting fish, such as salmon, according to any combination of aspects 1-3, CHARACTERIZED IN THAT the pawls extension over the plate is between 5-35 mm, preferably between 25-35mm- more preferably between 20-25mm.
5. An apparatus for processing fish with collarbones and heads with gills, such as salmon with heads according to any combination of aspects 1-4, CHARACTERIZED IN THAT the pawl is made adjustable so that the extension over the plate can be adjusted.
6. An apparatus for processing fish with collarbones and heads with gills, such as salmon with heads according to any combination of aspects 3-5, CHARACTERIZED IN THAT the sideplates are made adjustable so that the plates can be moved away from or towards each other.
7. An apparatus for processing fish with collarbones and heads with gills, such as salmon with heads according to aspect 6, CHARACTERIZED IN THAT the sideplates comprise a contraction mechanism which, when nothing affects the sideplates pulls the sideplates towards each other, which contraction mechanism allows the sideplates to move away from each other when a fish is inserted between the sideplates.
8. An apparatus for processing fish with collarbones and heads with gills, such as salmon with heads according to aspect 6 and / or 7, CHARACTERIZED IN THAT the sideplates are moved synchronously away and towards each other.
9. An apparatus for processing fish with collarbones and heads with gills, such as salmon with heads, such as salmon according to any combination of aspects 6-8, CHARACTERIZED IN THAT the apparatus comprises a measuring mechanism which measures the distance between the sideplates.
10. An apparatus for processing fish with collarbones and heads with gills, such as salmon with heads according to any combination of aspects 1-9, characterized in that the supply station comprises a sensor which detects when a fish is located in the supply station.
11. An apparatus for processing fish with collarbones and heads with gills, such as salmon with heads according to aspect 10 and / or 11, CHARACTERIZED IN THAT the measuring mechanism sends information about the distance between the sideplates when a fish is detected by the sensor to the computer-(s) controlling the cutting and transport mechanism, which computer then calculates and controls the further processing of the fish depending on the measured distance.

The supply station described above can be combined with all embodiments of the apparatus described above and all embodiment of the apparatus recited in the below claims.

## Claims

1. An apparatus for processing fish with collarbones and heads with gills, such as salmon with heads, which apparatus comprises;
two rotating circular knives mounted in guides adapted such that their centres of rotation can be moved synchronously towards or away from each other; **characterized in that**, tilting mechanisms are provided at the knives individual centre of rotation, which tilting mechanisms are adapted such that the angles defined by the plane of the circular knives can be changed individually and independently of whether the blades move towards or away from each other.

2. An apparatus for processing fish with collarbones and heads with gills, such as salmon with heads according to claim 1, wherein, the apparatus further comprises a transport mechanism adapted for transport of the fish between different process equipment.

3. An apparatus for processing fish with collarbones and heads with gills, such as salmon with heads according to claim 1 or 2, wherein, the apparatus comprise a band saw for cutting off the head of the fish.

4. An apparatus for processing fish with collarbones and heads with gills, such as salmon with heads according to any of the claims 1-3, wherein, the apparatus comprises a computer capable of controlling the transport mechanism, the two knives and the band saw.

5. An apparatus for processing fish with collarbones and heads with gills, such as salmon with heads according to any of the claims 1-4, wherein the two rotating knives are adapted such that they can perform two cuts adjacent to and on the side of the collarbones that faces towards the fish tail and thereby partly freeing the collarbones from the fish's body in such a way that the collarbones remains attached to the fish's body in an area laying on the fish's backside and such that the collarbones can be released from the body and head of the fish by the bandsaw making a cut adjacent to and on the side of the collarbones that faces head of the fish.

6. An apparatus for processing fish with collarbones and heads with gills, such as salmon with heads according to any combination of claims 3-5, wherein, the transport mechanism transports the fish between the location of the two rotating knives and the location of the band saw.

7. An apparatus for processing fish with collarbones and heads with gills, such as salmon with heads according to any combination of claims 1-6, wherein the apparatus comprises measuring mechanisms capable of measuring date about the length, the thickness and the weight of fish being processed in the apparatus, which measuring devices are adapted such that they can transmit these facts to the computer.

8. A method for processing fish with a body having a bellyside, backside, collarbone and head, which method comprises the following steps:
making two cuts that are substantially symmetrical about a plane extending through the centre of the fish and in the longitudinal direction of the fish and
through the belly and back of the fish, which two cuts are performed:
from the skin side of the fish on the side of the collarbone of the fish opposite the head of the fish and obliquely below the collarbone of the fish towards the centre of the fish (spine);
making a third cut which cuts off the head of the fish on that side of the collarbone of the fish that faces the head of the fish, which cuts extends from the belly side of the fish to the back side of the fish.

9. A methos according to claim 8, wherein the first two incisions are made substantially simultaneously, and the third cut follows these.

10. A method according to claim 8 and / or 9, wherein the first two steps are made by means of circular knives.

11. A method according to any combination of claims 8-10, wherein the third cut is made with a band saw.

12. A method according to any combination of claims 9-11, wherein the first two cuts do not cut completely through the fish, but leave an area on the back of the fish, where the two pieces containing collarbones sit together with the body and the main part of the fish, where the third cut is made so that the body of the fish, the head of the fish and the two pieces containing the collarbone are cut into separate pieces.

13. A method according to claim 11 and / or 12, wherein the band saw is guided so close to the collarbones of the fish that the cut contain: less than 5% bone remains therefrom, preferably less than 1% bone remains, more preferably less than 0.5% bone remains.

14. A method according to any combination of claims 8-13, wherein the position of the fish collarbone is known/determined by use a supply station and a stop device as described in aspect 1, and that this information is utilized, e.g. via computer control, such that the cuts are made close to the collarbone (s) of the fish and in such a way that the collarbone of the fish is cut out with the fish's pectoral fins.

15. A method according to any combination of claims 8-14, wherein the position of the fish collarbone is known/determined by use a supply station and a stop device as described in aspect 1, and that this information is utilized, e.g. via computer control, such that the cuts are made close to the collarbone (s) of the fish and in such a way that the collarbone of the fish is cut out with and/or without the fish's pectoral fins.
